(19) Europäisches Patentamt
European Patent Office
Office européen des brevets

(11) **EP 4 332 608 A1**

(12) **EUROPEAN PATENT APPLICATION**

(43) Date of publication:
06.03.2024 Bulletin 2024/10

(21) Application number: 23158961.5

(22) Date of filing: 28.02.2023

(51) International Patent Classification (IPC):
*G01S 5/00* (2006.01)      *G01S 5/02* (2010.01)

(52) Cooperative Patent Classification (CPC):
G01S 11/06; G01S 5/01; G01S 5/0269;
G01S 5/0284; G01S 19/48; G01S 2205/01

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.08.2022  CN 202211059024

(71) Applicant: Chongqing Changan New Energy
Vehicles Technology Co., Ltd
Chongqing 401133 (CN)

(72) Inventor: MAO, Chaolong
Chongqing, 401133 (CN)

(74) Representative: 2K Patentanwälte Blasberg
Kewitz & Reichel
Partnerschaft mbB
Schumannstrasse 27
60325 Frankfurt am Main (DE)

(54) **GPS AND SIGNAL STRENGTH BASED INDOOR POSITIONING METHOD, DEVICE AND MEDIUM**

(57)    Disclosed are an iBeacon-based indoor positioning method, apparatus, device, and medium. The method includes: receiving a first iBeacon signal sent by a device to be positioned; and acquiring a corresponding received signal strength indicator and a transmitted signal power strength of the device to be positioned according to the received first iBeacon signal, and determining a distance to the device to be positioned through a pre-generated distance formula to position the device to be positioned. Thus, by considering the degree of signal attenuation, a distance formula is pre-generated to perform positioning according to the distance formula, thereby improving the accuracy of a positioning result.

Receive a first iBeacon signal sent by a device to be positioned — S101

Acquire a corresponding received signal strength indicator and a transmitted signal power strength of the device to be positioned according to the received first iBeacon signal, and determine a distance to the device to be positioned through a pre-generated distance formula to position the device to be positioned — S102

Fig. 1

EP 4 332 608 A1

# Description

## Field of the Invention

The present application relates to the technical field of indoor positioning, and in particular to an iBeacon-based indoor positioning method, apparatus, device, and medium.

## Background of the Invention

In the related art, an iBeacon is generally positioned indoors by means of triangular centroid positioning or three-point positioning. However, regardless of positioning modes used, RSSI values of three iBeacon devices are used to participate in the calculation. That is, only the signal strength of a receiving end is considered, and the problem of dynamic signal attenuation caused by environmental factors cannot be avoided, thereby affecting the accuracy of positioning.

## Summary of the Invention

The present application provides an iBeacon-based indoor positioning method, apparatus, device, and medium, which solve the problem in the related art that dynamic signal attenuation caused by environmental factors cannot be avoided since only the signal strength of a receiving end is considered. By considering the degree of signal attenuation, a distance formula is pre-generated to perform positioning according to the distance formula, thereby improving the accuracy of a positioning result.

An embodiment in a first aspect of the present application provides an iBeacon-based indoor positioning method, including the following steps:
receiving a first iBeacon signal sent by a device to be positioned; and acquiring a corresponding received signal strength indicator and a transmitted signal power strength of the device to be positioned according to the received first iBeacon signal, and determining a distance to the device to be positioned through a pre-generated distance formula to position the device to be positioned.

According to the above technical means, in the embodiments of the present application, a first iBeacon signal sent by a device to be positioned is received to acquire a corresponding received signal strength indicator and a transmitted signal power strength of the device to be positioned according to the received first iBeacon signal. A distance to the device to be positioned is determined through a pre-generated distance formula to position the device to be positioned, thereby improving the accuracy of a positioning result.

Further, the above iBeacon-based indoor positioning method also includes: determining whether the device to be positioned is within an observable range according to the distance to the device to be positioned; and acquiring a GPS altitude parameter if the device to be positioned is within an observable range and out of sight to spatially position the device to be positioned according to the GPS altitude parameter.

According to the above technical means, since a multi-story building exists indoors, it is likely that detection positions are close or overlapped, but a vehicle cannot be positioned. That is, positioning devices are at different floors. Therefore, in order to accurately position a device to be positioned, spatial position needs to be performed in combination with a GPS altitude parameter to further improve the accuracy of a positioning result.

Further, the pre-generating a distance formula includes: collecting data information, the data information including a received signal strength indicator corresponding to each of a plurality of distances between a plurality of iBeacon devices and an iBeacon sending device; and determining a basic distance formula according to the data information, adding environmental constant factors to the basic distance formula, and performing data calibration to generate a final distance formula.

According to the above technical means, data is pre-collected, a distance formula is generated according to a data rule, and data calibration is performed through data regression to obtain a final distance formula. Thus, distance estimation may be performed according to the distance formula, whereby the positioning speed is high, and the effect is good.

Further, the final distance formula is represented as:

$$D = A * (\frac{R}{T})^B + C$$

where D represents the distance, A and C represent the environmental constant factors, R represents the received signal strength indicator, T represents the transmitted signal power strength, and B represents the independent variable constant.

Further, the acquiring a GPS altitude parameter to spatially position the device to be positioned according to the GPS altitude parameter includes:

acquiring a GPS altitude parameter, and sending a second iBeacon signal to the device to be positioned; and

receiving a third iBeacon signal sent by the device to be positioned after determining a spatial position according to the GPS altitude parameter to spatially position the device to be positioned according to the third iBeacon signal.

According to the above technical means, since the spatial positioning by a GPS is relatively accurate, the accuracy of the positioning result is further improved by using the GPS altitude parameter in connection with an iBeacon.

An embodiment in a second aspect of the present application provides an iBeacon-based indoor positioning apparatus, including: a receiving module, configured to receive a first iBeacon signal sent by a device to be positioned; and a first positioning module, configured to acquire a received signal strength indicator and a transmitted signal power strength of the device to be positioned according to the received first iBeacon signal, and determine a distance to the device to be positioned through a pre-generated distance formula to position the device to be positioned.

Further, the iBeacon-based indoor positioning apparatus also includes: a determination module, configured to determine whether the device to be positioned is within an observable range according to the distance to the device to be positioned; and a second positioning module, configured to acquire a GPS altitude parameter if the device to be positioned is within an observable range and out of sight to spatially position the device to be positioned according to the GPS altitude parameter.

Further, the iBeacon-based indoor positioning apparatus also includes: a generation module, configured to collect data information, the data information including a received signal strength indicator corresponding to each of a plurality of distances between a plurality of iBeacon devices and an iBeacon sending device; and determine a basic distance formula according to the data information, add environmental constant factors to the basic distance formula, and perform data calibration to generate a final distance formula.

Further, the final distance formula is represented as:

$$D = A * (\frac{R}{T})^B + C$$

where D represents the distance, A and C represent the environmental constant factors, R represents the received signal strength indicator, T represents the transmitted signal power strength, and B represents the independent variable constant.

Further, the second positioning module is specifically configured to: acquire a GPS altitude parameter, and send a second iBeacon signal to the device to be positioned; and receive a third iBeacon signal sent by the device to be positioned after determining a spatial position according to the GPS altitude parameter to spatially position the device to be positioned according to the third iBeacon signal.

An embodiment in a third aspect of the present application provides an electronic device, including: a memory, a processor, and a computer program stored on the memory and executable on the processor. The processor executes the program to implement the iBeacon-based indoor positioning method as described in the above embodiment.

An embodiment in a fourth aspect of the present application provides a computer-readable storage medium storing computer instructions for enabling a computer to perform the iBeacon-based indoor positioning method as described in the above embodiment.

In the embodiments of the present application, a first iBeacon signal sent by a device to be positioned is received; and a corresponding received signal strength indicator and a transmitted signal power strength of the device to be positioned are acquired according to the received first iBeacon signal, and a distance to the device to be positioned is determined through a pre-generated distance formula to position the device to be positioned. Thus, the problem in the related art that dynamic signal attenuation caused by environmental factors cannot be avoided since only the signal strength of a receiving end is considered. By considering the degree of signal attenuation, a distance formula is pre-generated to perform positioning according to the distance formula, thereby improving the accuracy of a positioning result.

Additional aspects and advantages of the present application will be set forth in part in the following description, will be obvious in part from the following description, or may be learned by practice of the present application.

**Brief Description of the Drawings**

The above and/or additional aspects and advantages of the present application will become apparent and more readily appreciated from the following description of the embodiments, where:

Fig. 1 is a flowchart of an iBeacon-based indoor positioning method according to an embodiment of the present application;

Fig. 2 is a schematic diagram of an iBeacon data frame format according to one embodiment of the present application;

Fig. 3 is a schematic diagram of an iBeacon positioning effect of a mobile device according to one embodiment of the present application;

Fig. 4 is a schematic diagram of a mobile device away from an iBeacon device signal according to one embodiment of the present application;

Fig. 5 is a schematic diagram of a mobile device close to an iBeacon device signal according to one embodiment of the present application;

Fig. 6 is a schematic diagram of iBeacon device signal interference according to one embodiment of the present application;

Fig. 7 is a schematic diagram of an RSSI-distance corresponding relationship according to one embodiment of the present application;

Fig. 8 is a flowchart of an iBeacon-based indoor positioning method according to one embodiment of the present application;

Fig. 9 is a schematic block diagram of an iBeacon-based indoor positioning apparatus according to an embodiment of the present application;

Fig. 10 is a schematic block diagram of an iBeacon-based indoor positioning apparatus according to one embodiment of the present application; and

Fig. 11 is an exemplary diagram of an electronic device according to an embodiment of the present application.

In the figures, 10: iBeacon-based indoor positioning apparatus, 100: receiving module, 200: first positioning module, 300: determination module, 400: second positioning module, 500: generation module.

## Detailed Description of the Embodiments

Embodiments of the present application will be described below in detail, and examples of the embodiments are illustrated in the accompanying drawings, wherein like or similar reference numerals represent the same or similar elements or elements having the same or similar function throughout. The embodiments described below with reference to the accompanying drawings are exemplary, are intended to be illustrative of the present application, and are not to be construed as limiting the present application.

An iBeacon-based indoor positioning method, apparatus, device, and medium in the embodiments of the present application are described below with reference to the accompanying drawings. In view of the problem mentioned in the Background of the Invention that data inaccuracy caused by dynamic signal attenuation cannot be avoided since only the signal strength of a receiving end is considered, the present application provides an iBeacon-based indoor positioning method. In this method, a first iBeacon signal sent by a device to be positioned is received; and a corresponding received signal strength indicator and a transmitted signal power strength of the device to be positioned are acquired according to the received first iBeacon signal, and a distance to the device to be positioned is determined through a pre-generated distance formula to position the device to be positioned. Thus, the problem in the related art that dynamic signal attenuation caused by environmental factors cannot be avoided since only the signal strength of a receiving end is considered. By considering the degree of signal attenuation, a distance formula is pre-generated to perform positioning according to the distance formula, thereby improving the accuracy of a positioning result.

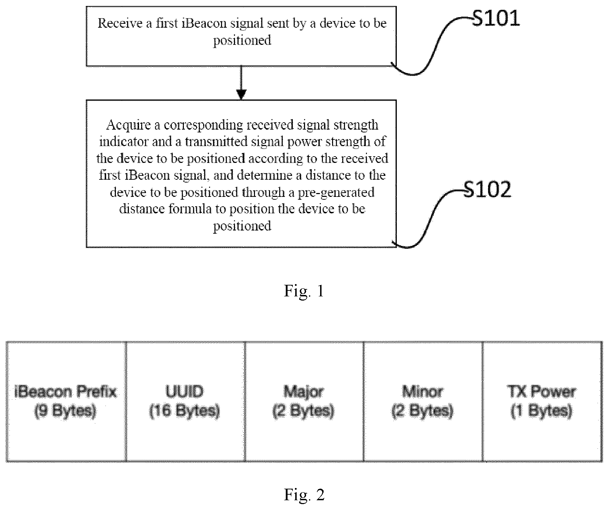

Specifically, Fig. 1 schematically shows a flowchart of an iBeacon-based indoor positioning method according to an embodiment of the present application.

As shown in Fig. 1, the iBeacon-based indoor positioning method includes the following steps:
In step S101, a first iBeacon signal sent by a device to be positioned is received.

As one embodiment, a first iBeacon signal sent by a device to be positioned may be received by a mobile device installed with an APP supporting an iBeacon protocol, such as an Android mobile phone or an iPhone. The device to be positioned is a Bluetooth device supporting sending of iBeacon data.

It should be noted that an iBeacon technology has been opened, and a specific data frame format thereof is as shown in Fig. 2. UUID represents a unique manufacturer identifier and has 16 bytes. Major is a group ID, has 2 bytes, and has a value range of 0-0xff. That is, a manufacturer has at most 2-16 groups. Minor is an ID of a single iBeacon device, has 2 bytes, and has a value range of 0-0xff. That is, a group has at most 2-16 iBeacon devices. TX Power is 1 byte. The transmitted signal power strength of the iBeacon devices is negative and represented by a complement.

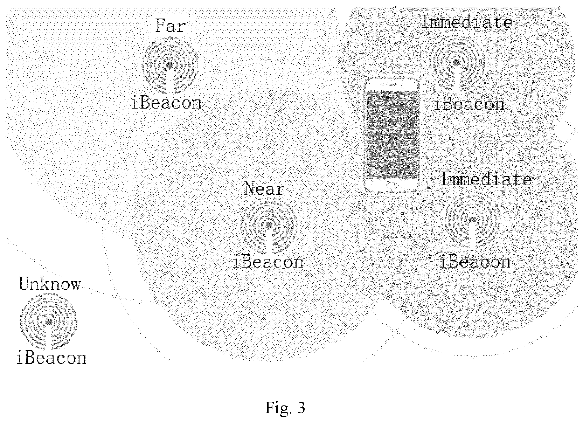

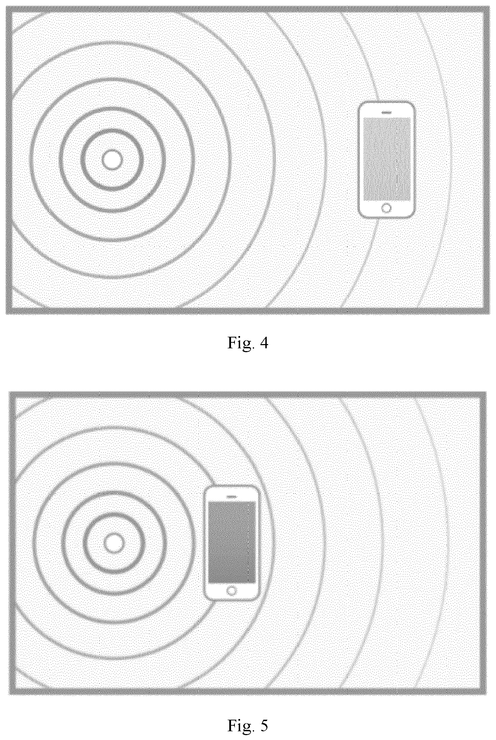

In addition, Apple devices and Android devices may perform near-field device positioning through the iBeacon technology, especially in indoor and parking scenes where GPS positioning signals are weak, but the technical support levels of the two platforms are different. Apple devices have merged iBeacon indoor positioning with GPS outdoor positioning, and may seamlessly switch between indoor positioning and outdoor positioning. However, there is no explicit value for a positioning distance, and only enumerating alternative distances are defined. Immediate represents that the positions are very close and even overlapped. Near represents that the distance is within a range of 1-3 meters. Far represents that the device can be scanned, and the positioning result cannot be used as reference. Unknown represents that the device is out of scanning range. The positioning effect is shown in Fig. 3. By means of a data protocol of iBeacon, in view of the functionality of the Android platform, a BLE-based iBeacon implementation scheme is written by community workers. In view of positioning and ranging, rough estimation is performed by the Bluetooth signal strength RSSI of a mobile device, and the effect of a relationship between the signal strength RSSI and the distance is shown in Figs. 4 and 5.

In step S 102, a corresponding received signal strength indicator and a transmitted signal power strength of the device to be positioned are acquired according to the received first iBeacon signal, and a distance to the device to be positioned is determined through a pre-generated distance formula to position the device to be positioned.

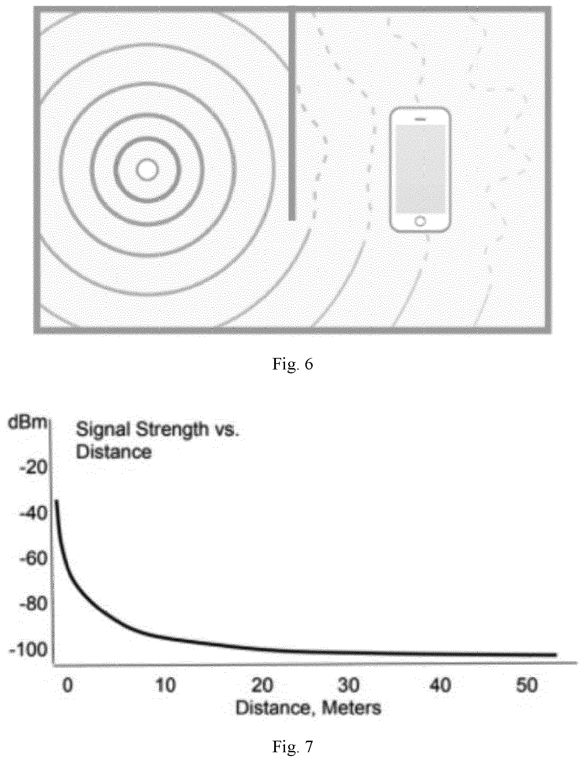

It should be noted that if the signal is interfered or blocked due to the obstruction of an indoor wall, a final ranging result is unreliable. The iBeacon signal interference is as shown in Fig. 6. At this moment, a distance formula is pre-generated by considering the degree of signal attenuation to perform positioning according to the distance formula, thereby improving the accuracy of the positioning result.

As one embodiment, the pre-generating a distance formula includes: collecting data information, the data information including a received signal strength indicator corresponding to each of a plurality of distances between a plurality of iBeacon devices and an iBeacon sending device; and determining a basic distance formula according to the data information, adding environmental constant factors to the basic distance formula, and performing data calibration to generate a final distance formula.

As a specific embodiment, data collection is performed first. Collection tools include an Android device and an Apple device installed with Apps supporting an iBeacon protocol, and a Bluetooth device supporting sending of iBeacon data. A collection environment is an unobstructed outdoor environment within 50 meters. Collection steps include: keeping the position of an iBeacon sending device fixed. The Android device and the Apple device are respectively located at 0.25 meters, 0.5 meters, 1 meter, 2 meters, 3 meters, 4 meters, 5 meters, 6 meters, 7 meters, 8 meters, 9 meters, 10 meters, 12 meters, 14 meters, 16 meters, 18 meters, 20 meters, 25 meters, 30 meters, 40 meters, and 50 meters away from the iBeacon sending device. An average value of RSSIs within 30 seconds is counted at each position. In order to reduce the interference of environmental factors, each position needs to screen out data with upper and lower limits of 10%, and data information is thus obtained.

Next, a "schematic diagram of an RSSI-distance corresponding relationship" as shown in Fig. 7 is drawn according to the data information. It can be seen from Fig. 7 that, as the distance increases, the RSSI will be continuously attenuated. That is, when the mobile device is away from the iBeacon device, the RSSI is weakened, and when the mobile device is close to the iBeacon device, the RSSI is enhanced. It is observed that the curve of Fig. 7 follows the law of an exponential function "$y=a^{\wedge}x \ (a > 0 \text{ and} \neq 1)$". When $a > 1$, the function increases monotonically, and as x is larger, the image more trends to a y-axis. When $0 < a < 1$, the function decreases monotonically, and as x is smaller, the image more trends to the y-axis. Thus, according to the rule, it may be approximately represented by a formula "$D=(R/T)^{\wedge}10$". R is the received signal strength indicator (RSSI), T is the transmitted signal power strength (TX Power), and D is the distance. The reason why the exponent is equal to 10 is that the power is enhanced by 10 times as the signal strength is increased by 10 dBm. When the attenuation is less than 1.0, it means that the transmitted power of the iBeacon device can cover devices in the coverage area. When the attenuation exceeds 1.0, there are many reasons for unstable measurement results.

It should be noted that device hardware causes for unstable measurement results are limited measurement range of an RSSI sensor, Bluetooth channel switching, and different layout of motherboard antennae. Environmental causes are radio noise, obstructions and signal reflections. Human factors include different measurement results when the body is covered or the device is placed in a pocket. It is more important to calibrate data of different devices, especially the Android platform with serious device fragmentation. Therefore, it is necessary to add environmental constant factors A and C on the basis of the above basic formula "$D=(R/T)^{\wedge}10$" to obtain

a formula $D = A * \left(\dfrac{R}{T}\right)^{B} + C$, where B is an independent variable and D is a dependent variable.

Finally, data calibration is performed. The specific implementation steps include: dividing RSSI data of each position of the Android device in the data collection by RSSI data of the Apple device at the position of 1 meter to obtain Ratio, and filling into the first column of the Excel table; filling the distance of each position of the Android device in the data collection into the second column of the Excel table; using a regression function in Excel data analysis, selecting the first column of Ratio data as an X value (independent variable) input region, and selecting the second column of distance data as a Y value (dependent variable) to obtain a regression statistical table; checking "Multiple R" which is a correlation coefficient R value, wherein if Multiple R is greater than 0.8, a strong positive correlation is indicated; checking "R Square" which is a determination coefficient and a goodness of fit, wherein as the value is greater, the fit is better; after checking the two results, fundamentally determining that the result has statistical significance; according to "Intercept" and "XVariable" in the first column of "Coefficients", deriving a regression equation: Y=(X Variable)*X^Intercept; then, for each input independent variable X, predicting the dependent variable Y according to the regression equation, "X Variable" being value A in the formula $D = A * \left(\dfrac{R}{T}\right)^{B} + C$; creating a new Excel table with columns RSSI, Ratio, actual distance, and predicted distance, filling the previously generated data into the first three columns, and calculating the predicted data in this column by using the derived regression equation Y=(X Variable)*X^Intercept; subtracting the predicted distance from the actual distance to calculate a difference value Subtract, "Subtract" being value C in the formula

$D = A * \left(\dfrac{R}{T}\right)^{B} + C$; and obtaining a final distance formula.

As one embodiment, the above iBeacon-based indoor positioning method also includes: determining whether the device to be positioned is within an observable range according to the distance to the device to be positioned; and acquiring a GPS altitude parameter if the device to be positioned is within an observable range and out of sight to spatially position the device to be positioned according to the GPS altitude parameter.

That is to say, a user determines whether the device to be positioned is within an observable range. If the device to be positioned is within an observable range but out of sight of the user, a GPS altitude parameter is acquired to spatially position the device to be positioned according to the GPS altitude parameter.

It should be noted that detection positions are close or overlapped but a vehicle cannot be positioned inside a multi-story building. At this moment, the characteristics of the GPS altitude parameter may be acquired by using a positioning function of the mobile device to compensate for this defect. The GPS positioning of the mobile device has a poor signal indoors, and the mobile device can only be positioned to a certain range. However, the position of the mobile device within this range is basically considered to be a plane, meaning that the altitude parameter of the GPS positioning is relatively accurate.

As one embodiment, the acquiring a GPS altitude parameter to spatially position the device to be positioned according to the GPS altitude parameter includes: acquiring a GPS altitude parameter, and sending a second iBeacon signal to the device to be positioned; and receiving a third iBeacon signal sent by the device to be positioned after determining a spatial position according to the GPS altitude parameter to spatially position the device to be positioned according to the third iBeacon signal.

That is to say, a GPS altitude parameter is acquired via a GPS positioning function of a mobile device installed with an APP supporting an iBeacon protocol, and a second iBeacon signal and the GPS altitude parameter are sent to a device to be positioned via the iBeacon, whereby the device to be positioned determines a spatial position according to the GPS altitude parameter, adjusts the transmitted signal power strength (TX Power) and sends a third iBeacon signal to the mobile device to complete final positioning.

It should be noted that if the mobile device detects an iBeacon signal from a Bluetooth device and calculates that the distance is within an observable range, but there is no vehicle in the sight, it is indicated that the Bluetooth device is at a different altitude than the mobile device. The mobile device may actively send iBeacon data via Bluetooth, and the data format thereof is identical to that of iBeacon data of the Bluetooth device except for TX Power. After detecting that the mobile device broadcasts the iBeacon data, the Bluetooth device broadcasts the iBeacon data with the adjusted TX Power again to complete final positioning. In addition, a spatial relationship between the mobile device and the Bluetooth device may be determined according to the received TX Power: the increase of TX Power indicates that the Bluetooth device is above the mobile device, and the decrease of TX Power indicates that the Bluetooth device is below the mobile device.

In conclusion, a first iBeacon signal sent by a device to be positioned is received; and a corresponding received signal strength indicator and a transmitted signal power strength of the device to be positioned are acquired according to the received first iBeacon signal, and a distance to the device to be positioned is determined through a pre-generated distance formula to position the device to be positioned. Thus, the problem in the related art that dynamic signal attenuation caused by environmental factors cannot be avoided since only the signal strength of a receiving end is considered. By considering the degree of signal attenuation, a distance formula is pre-generated to perform positioning according to the distance formula, thereby improving the accuracy of a positioning result.

To further enable those skilled in the art to understand the iBeacon-based indoor positioning method in the embodiment of the present application, a detailed description is provided below in connection with specific embodiments.

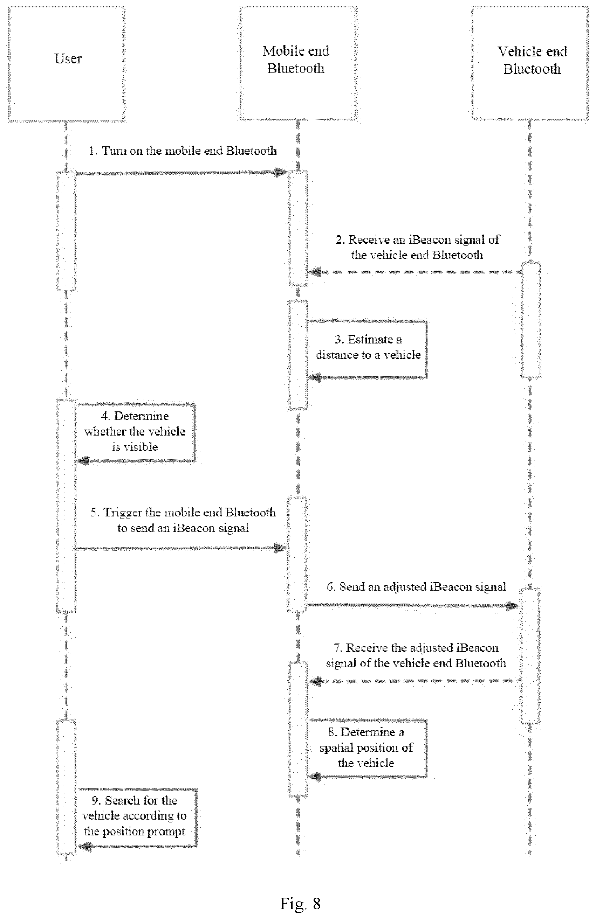

Specifically, as shown in Fig. 8, Fig. 8 is a flowchart of an iBeacon-based indoor positioning method according to a specific embodiment of the present application. In the flowchart, positioning of a vehicle in a parking lot is taken as an example. A vehicle end Bluetooth is disposed on the vehicle in the parking lot. Firstly, a user turns on a mobile end Bluetooth. Secondly, when the mobile end Bluetooth receives an iBeacon signal sent by the vehicle end Bluetooth, a distance to the vehicle is estimated. Thirdly, it is determined whether the vehicle is visible according to the distance to the vehicle. If the vehicle is visible but out of sight, the user triggers the mobile end Bluetooth to send an iBeacon signal. Then, the mobile end Bluetooth sends an adjusted iBeacon signal to the vehicle end Bluetooth, and then the vehicle end Bluetooth returns the iBeacon signal after receiving the adjusted iBeacon signal. Finally, the mobile end Bluetooth determines a spatial position of the vehicle according to the iBeacon signal so as to search for the vehicle according to the position prompt.

Next, an iBeacon-based indoor positioning apparatus according to an embodiment of the present application will be described with reference to the accompanying drawings.

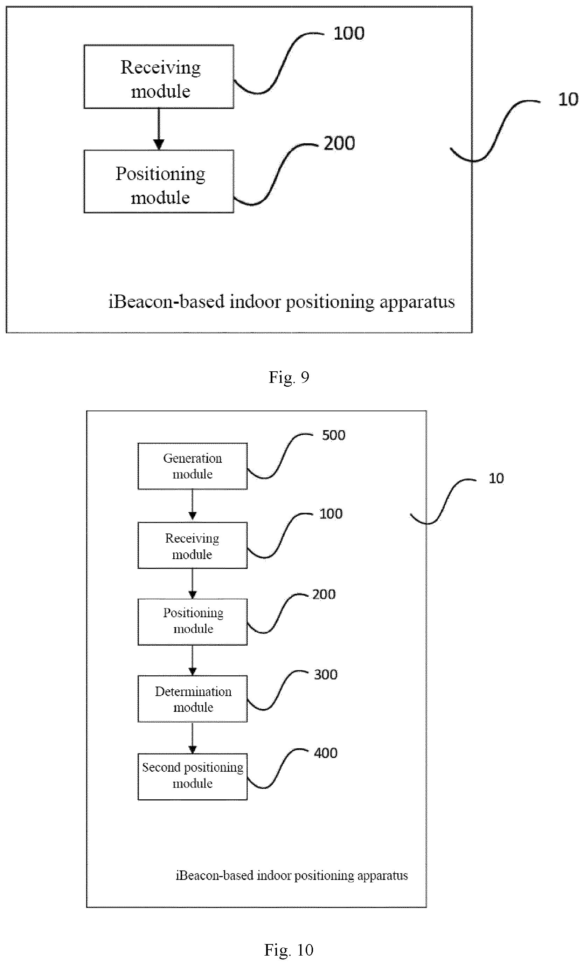

Fig. 9 is a schematic block diagram of an iBeacon-based indoor positioning apparatus according to an embodiment of the present application.

As shown in Fig. 9, the iBeacon-based indoor positioning apparatus 10 includes: a receiving module 100 and a first positioning module 200.

The receiving module 100 is configured to receive a first iBeacon signal sent by a device to be positioned.

The first positioning module 200 is configured to acquire a received signal strength indicator and a transmitted signal power strength of the device to be positioned according to the received first iBeacon signal, and determine a distance to the device to be positioned through a pre-generated distance formula to position the device to be positioned.

Further, as shown in Fig. 10, the iBeacon-based indoor positioning apparatus 10 also includes: a determination module 300 and a second positioning module 400.

The determination module 300 is configured to determine whether the device to be positioned is within an observable range according to the distance to the device to be positioned.

The second positioning module 400 is configured to acquire a GPS altitude parameter if the device to be positioned is within an observable range and out of sight to spatially position the device to be positioned according to the GPS altitude parameter.

Further, as shown in Fig. 10, the iBeacon-based indoor positioning apparatus 10 also includes: a generation module 500, configured to collect data information, the data information including a received signal strength indicator corresponding to each of a plurality of distances between a plurality of iBeacon devices and an iBeacon sending device; and determine a basic distance formula according to the data information, add environmental constant factors to the basic distance formula, and perform data calibration to generate a final distance formula.

Further, the final distance formula is represented as:

$$D = A * (\frac{R}{T})^B + C$$

where D represents the distance, A and C represent the environmental constant factors, R represents the received signal strength indicator, T represents the transmitted signal power strength, and B represents the independent variable constant.

Further, the second positioning module 400 is specifically configured to: acquire a GPS altitude parameter, and send a second iBeacon signal to the device to be positioned; and receive a third iBeacon signal sent by the device to be positioned after determining a spatial position according to the GPS altitude parameter to spatially position the device to be positioned according to the third iBeacon signal.

It should be noted that the foregoing explanation of the embodiment of the iBeacon-based indoor positioning method is also applicable to the iBeacon-based indoor positioning apparatus of this embodiment, and the apparatus will not be described in detail herein.

According to the iBeacon-based indoor positioning apparatus proposed in the embodiment of the present application, a first iBeacon signal sent by a device to be positioned is received; and a corresponding received signal strength indicator and a transmitted signal power strength of the device to be positioned are acquired according to the received first iBeacon signal, and a distance to the device to be positioned is determined through a pre-generated distance formula to position the device to be positioned. Thus, the problem in the related art that dynamic signal attenuation caused by environmental factors cannot be avoided since only the signal strength of a receiving end is considered. By considering the degree of signal attenuation, a distance formula is pre-generated to perform positioning according to the distance formula, thereby improving the accuracy of a positioning result.

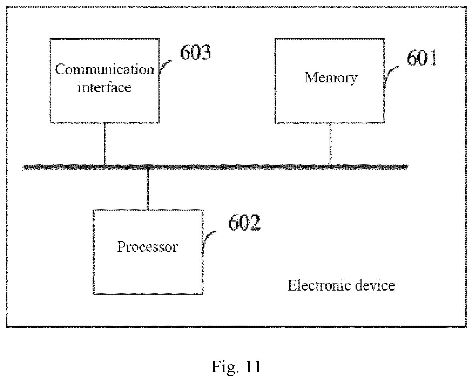

Fig. 11 is a schematic structure diagram of an electronic device according to an embodiment of the present application. The electronic device may include: a memory 601, a processor 602, and a computer program stored on the memory 601 and executable on the processor 602.

The processor 602, when executing the program, implements the iBeacon-based indoor positioning method provided in the above embodiments.

Further, the electronic device further includes: a communication interface 603 configured for communication between the memory 601 and the processor 602.

The memory 601 is configured to store the computer program executable on the processor 602.

The memory 601 may include a high-speed RAM, and may also include a nonvolatile memory, such as at least one disk memory.

If the memory 601, the processor 602 and the communication interface 603 are implemented independently, the communication interface 603, the memory 601 and the processor 602 may be connected to each other via a bus and perform communication with each other. The bus may be an industry standard architecture (ISA) bus, a peripheral component (PCI) bus, or an extended industry standard architecture (EISA) bus, etc. The bus may be divided into an address bus, a data bus, a control bus, etc. For ease of illustration, only one bold line is used to represent the bus in FIG. 11, but it is not indicated that there is only one bus or one type of bus.

Optionally, in a specific implementation, if the memory 601, the processor 602 and the communication interface 603 are integrated on one chip, the memory 601, the processor 602 and the communication interface 603 may communicate with each other through an internal interface.

The processor 602 may be a central processing unit (CPU), or an application specific integrated circuit (ASIC), or one or more integrated circuits configured to implement embodiments of the present application.

An embodiment of the present application also provides a computer-readable storage medium having a computer program stored thereon. The program, when executed by a processor, implements the iBeacon-based indoor positioning method as described above.

In the descriptions of this specification, descriptions with reference to the terms "one embodiment", "some embodiments", "examples", "specific examples", or "some examples", etc. mean that specific features, structures, materials, or characteristics described in conjunction with the embodiment or example are included in at least one embodiment or example of the present application. In this specification, schematic representations of the above terms do not necessarily refer to the same embodiment or example. Furthermore, the specific features, structures, materials, or characteristics described may be combined in a suitable manner in any one or N embodiments or examples. In addition, without contradicting each other, those skilled in the art may integrate and combine different embodiments or examples and features of different embodiments or examples described in this specification.

In addition, terms "first" and "second" are used for descriptive purposes only and are not to be construed as indicating or implying relative importance or implicitly indicating the number of technical features indicated. Thus, a feature defined as "first" or "second" may explicitly or implicitly include at least one such feature. In the description herein, "N" means at least two, e.g., two, three, etc. unless specifically limited otherwise.

Any process or method description in a flowchart or otherwise described herein may be understood to represent a module, segment or portion of code including one or N executable instructions for implementing custom logic functions or process steps, and the scope of the preferred implementations of the present application includes additional implementations. The functions may be performed in a substantially simultaneous manner, or in a reverse order, out of the order shown or discussed, according to the functionality involved, as would be understood by those skilled in the art to which the embodiments of the present application pertain.

The logic and/or steps represented in the flowchart or otherwise described herein, e.g. as a ordered list of executable instructions for implementing logical functions, may be embodied in any computer-readable medium for use by or in connection with an instruction execution system, apparatus or device (such as a computer-based system, a processor-containing system, or other systems that may obtain instructions from the instruction execution system, apparatus or device and execute the instructions). In this specification, the "computer-readable medium" may be any apparatus that may contain, store, communicate, propagate, or transmit the program for use by or in connection with the instruction execution system, apparatus or device. More specific examples (a non-exhaustive list) of the computer-readable medium include the following: an electrical connection portion (electronic apparatus) having one or N wires, a portable computer disk cartridge (magnetic apparatus), a random-access memory (RAM), a read-only memory (ROM), an erasable programmable read-only memory (EPROM) or a flash memory, an optical fiber apparatus, and a portable compact disc read-only memory (CDROM). In addition, the computer-readable medium may even be paper or another suitable medium upon which the program is printed, as the program may be electronically obtained, via, for example, optical scanning of the paper or another medium, then compiled, interpreted, or otherwise processed in a suitable manner, if necessary, and then stored in a computer memory.

It should be understood that portions of the present application may be implemented in hardware, software, firmware, or a combination thereof. In the above implementations, the N steps or methods may be implemented in software or firmware stored in the memory and executed by a suitable instruction execution system. For example, if implemented in hardware as in another implementation, it may be implemented using any one or combination of the following techniques known in the art: a discrete logic circuit having logic gates for implementing logic functions on data signals, an application specific integrated circuit having suitable combinational logic gates, a programmable gate array (PGA), a field programmable gate array (FPGA), etc.

It will be appreciated by those of ordinary skill in the art that all or a portion of the steps carried out by the method of the above embodiments may be performed through related hardware instructed by a program. The program may be stored in a computer-readable storage medium. The program, when executed, includes one of the steps in the method embodiments or a combination thereof.

In addition, respective functional units in various embodiments of the present application may be integrated in one processing module. Each unit may physically exist separately, or two or more units may be integrated in one module. The integrated modules may be implemented in the form of hardware or in the form of software functional modules. The integrated modules, if implemented in the form of software functional modules and sold or used as stand-alone products, may also be stored in a computer-readable storage medium.

The storage medium mentioned above may be a read-only memory, a magnetic or optical disk, etc. While the embodiments of the present application have been shown and described above, it will be understood that the above embodiments are exemplary and are not to be construed as limitations of the present application, and that variations, modifications, substitutions, and alterations to the above embodiments may be made by those of ordinary skill in the art within the scope of the present application.

**Claims**

1. An iBeacon-based indoor positioning method, comprising the following steps:

    receiving a first iBeacon signal sent by a device to be positioned; and
    acquiring a corresponding received signal strength indicator and a transmitted signal power strength of the device to be positioned according to the received first iBeacon signal, and determining a distance to the device to be positioned through a pre-generated distance formula to position the device to be positioned.

2. The iBeacon-based indoor positioning method according to claim 1, further comprising:

determining whether the device to be positioned is within an observable range according to the distance to the device to be positioned; and acquiring a GPS altitude parameter if the device to be positioned is within the observable range and out of sight to spatially position the device to be positioned according to the GPS altitude parameter.

3. The iBeacon-based indoor positioning method according to claim 1, wherein the pre-generating a distance formula comprises:

collecting data information, the data information comprising a received signal strength indicator corresponding to each of a plurality of distances between a plurality of iBeacon devices and an iBeacon sending device; and determining a basic distance formula according to the data information, adding environmental constant factors to the basic distance formula, and performing data calibration to generate a final distance formula.

4. The iBeacon-based indoor positioning method according to claim 3, wherein the final distance formula is represented as:

$$D = A * (\frac{R}{T})^B + C$$

wherein D represents the distance, A and C represent the environmental constant factors, R represents the received signal strength indicator, T represents the transmitted signal power strength, and B represents the independent variable constant.

5. The iBeacon-based indoor positioning method according to claim 2, wherein the acquiring a GPS altitude parameter to spatially position the device to be positioned according to the GPS altitude parameter comprises:

acquiring a GPS altitude parameter, and sending a second iBeacon signal to the device to be positioned; and receiving a third iBeacon signal sent by the device to be positioned after determining a spatial position according to the GPS altitude parameter to spatially position the device to be positioned according to the third iBeacon signal.

6. An iBeacon-based indoor positioning apparatus, comprising:

a receiving module, configured to receive a first iBeacon signal sent by a device to be positioned; and a first positioning module, configured to acquire a received signal strength indicator and a transmitted signal power strength of the device to be positioned according to the received first iBeacon signal, and determine a distance to the device to be positioned through a pre-generated distance formula to position the device to be positioned.

7. The iBeacon-based indoor positioning apparatus according to claim 6, further comprising:

a determination module, configured to determine whether the device to be positioned is within an observable range according to the distance to the device to be positioned; and a second positioning module, configured to acquire a GPS altitude parameter if the device to be positioned is within an observable range and out of sight to spatially position the device to be positioned according to the GPS altitude parameter.

8. The iBeacon-based indoor positioning apparatus according to claim 6, further comprising:
a generation module, configured to collect data information, the data information comprising a received signal strength indicator corresponding to each of a plurality of distances between a plurality of iBeacon devices and an iBeacon sending device; and determine a basic distance formula according to the data information, add environmental constant factors to the basic distance formula, and perform data calibration to generate a final distance formula.

9. The iBeacon-based indoor positioning apparatus according to claim 8, wherein the final distance formula is represented as:

$$D = A * (\frac{R}{T})^B + C$$

wherein D represents the distance, A and C represent the environmental constant factors, R represents the received signal strength indicator, T represents the transmitted signal power strength, and B represents the independent variable constant.

10. The iBeacon-based indoor positioning apparatus according to claim 7, wherein the second positioning module is specifically configured to:

acquire a GPS altitude parameter, and send a second iBeacon signal to the device to be positioned; and

receive a third iBeacon signal sent by the device to be positioned after determining a spatial position according to the GPS altitude parameter to spatially position the device to be positioned according to the third iBeacon signal.

11. An electronic device, comprising: a memory, a processor, and a computer program stored on the memory and executable on the processor which, when executed by the processor, cause the processor to implement the iBeacon-based indoor positioning method according to any of claims 1 to 5.

12. A computer-readable storage medium comprising instructions which, when executed by a processor, cause the processor to implement the iBeacon-based indoor positioning method according to any of claims 1 to 5.

Receive a first iBeacon signal sent by a device to be positioned ⟋ S101

Acquire a corresponding received signal strength indicator and a transmitted signal power strength of the device to be positioned according to the received first iBeacon signal, and determine a distance to the device to be positioned through a pre-generated distance formula to position the device to be positioned ⟋ S102

Fig. 1

| iBeacon Prefix (9 Bytes) | UUID (16 Bytes) | Major (2 Bytes) | Minor (2 Bytes) | TX Power (1 Bytes) |
|---|---|---|---|---|

Fig. 2

Fig. 3

Fig. 4

Fig. 5

Fig. 6

Fig. 7

| User | Mobile end Bluetooth | Vehicle end Bluetooth |
|------|----------------------|-----------------------|

1. Turn on the mobile end Bluetooth

2. Receive an iBeacon signal of the vehicle end Bluetooth

3. Estimate a distance to a vehicle

4. Determine whether the vehicle is visible

5. Trigger the mobile end Bluetooth to send an iBeacon signal

6. Send an adjusted iBeacon signal

7. Receive the adjusted iBeacon signal of the vehicle end Bluetooth

8. Determine a spatial position of the vehicle

9. Search for the vehicle according to the position prompt

Fig. 8

Fig. 9

Fig. 10

Fig. 11

Europäisches
Patentamt
European
Patent Office
Office européen
des brevets

# EUROPEAN SEARCH REPORT

Application Number

EP 23 15 8961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 275 254 B1 (PCMS HOLDINGS INC [US]) 13 February 2019 (2019-02-13) | 1,3,4,6, 8,9,11, 12 | INV. G01S5/00 G01S5/02 |
| Y | * figures 18A-18B * <br> * table 1 * <br> * paragraph [0075] – paragraph [0093] * <br> ----- | 2,5,7,10 | |
| Y | JP 4 419758 B2 (DENSO CORP) 24 February 2010 (2010-02-24) <br> * paragraph [0018] – paragraph [0055] * <br> ----- | 2,5,7,10 | |
| X | EP 3 566 218 B1 (JIANGSU HONGBAO HARDWARE CO LTD [CN]) 27 January 2021 (2021-01-27) | 1,6,11, 12 | |
| Y | * paragraph [0013] – paragraph [0014] * <br> * paragraph [0087] – paragraph [0117] * <br> ----- | 2,5,7,10 | |

TECHNICAL FIELDS
SEARCHED (IPC)

G01S

The present search report has been drawn up for all claims

| Place of search | Date of completion of the search | Examiner |
|---|---|---|
| Munich | 11 January 2024 | Bomart, Sébastien |

EPO FORM 1503 03.82 (P04C01)

**EP 4 332 608 A1**

**ANNEX TO THE EUROPEAN SEARCH REPORT
ON EUROPEAN PATENT APPLICATION NO.**

EP 23 15 8961

This annex lists the patent family members relating to the patent documents cited in  the above-mentioned European search report.
The members are as contained in the European Patent Office EDP file on
The European Patent Office is in no way liable for these particulars which are merely given for the purpose of information.

11-01-2024

| Patent document cited in search report | | Publication date | Patent family member(s) | | Publication date |
|---|---|---|---|---|---|
| EP  3275254 | B1 | 13-02-2019 | EP | 3275254 A1 | 31-01-2018 |
| | | | EP | 3499989 A1 | 19-06-2019 |
| | | | EP | 3955661 A1 | 16-02-2022 |
| | | | US | 2018067187 A1 | 08-03-2018 |
| | | | US | 2020150213 A1 | 14-05-2020 |
| | | | WO | 2016160376 A1 | 06-10-2016 |
| JP  4419758 | B2 | 24-02-2010 | DE | 102005041261 A1 | 02-03-2006 |
| | | | FR | 2874557 A1 | 03-03-2006 |
| | | | JP | 4419758 B2 | 24-02-2010 |
| | | | JP | 2006069296 A | 16-03-2006 |
| | | | US | 2006046684 A1 | 02-03-2006 |
| EP  3566218 | B1 | 27-01-2021 | AU | 2018217542 A1 | 29-08-2019 |
| | | | BR | 112019016604 A2 | 31-03-2020 |
| | | | CA | 3053461 A1 | 16-08-2018 |
| | | | CN | 110383351 A | 25-10-2019 |
| | | | EP | 3566218 A1 | 13-11-2019 |
| | | | JP | 2020510911 A | 09-04-2020 |
| | | | NZ | 756227 A | 30-04-2021 |
| | | | SG | 11201907383Q A | 27-09-2019 |
| | | | US | 2019360825 A1 | 28-11-2019 |
| | | | WO | 2018145571 A1 | 16-08-2018 |

EPO FORM P0459

For more details about this annex : see Official Journal of the European Patent Office, No. 12/82

19